# EUROPEAN PATENT SPECIFICATION

(11) **EP 2 654 397 B1**
(45) Date of publication and mention of the grant of the patent: **20.11.2019**
(21) Application number: 11831777.5
(22) Date of filing: 22.12.2011
(51) Int. Cl.: A01G 18/70, A01G 18/60

(54) **HARVESTING DEVICE, GROW SPACE, GROW SYSTEM AND METHOD**
ERNTEVORRICHTUNG, WACHSTUMSRAUM, WACHSSTUMSSYSTEM UND VERFAHREN
DISPOSITIF DE RÉCOLTE, ESPACE DE CULTURE, SYSTÈME ET PROCÉDÉ DE CULTURE

(30) Priority: 22.12.2010 NL 1038470
(43) Date of publication of application: 30.10.2013
(73) Proprietor: Van den Top, Hendrik, 3771 AH Barneveld (NL)
(72) Inventor: Van den Top, Hendrik, 3771 AH Barneveld (NL)
(74) Representative: Hoeben, Ferdinand Egon
(86) International application number: PCT/NL2011/050894
(87) International publication number: WO 2012/161567

(56) References cited:
- WO-A1-2006/111619
- WO-A2-2007/100245
- DE-A1- 2 535 057
- FR-A1- 2 663 500
- US-A- 3 936 975

## Description

The present invention relates to a harvesting device for facilitating harvesting of crops growing on a substrate or soil, preferably arranged in a seed-bed. This relates to crops such as toadstools or mushrooms. The present invention further relates to a growth space for growing crops. The present invention further relates to a growth system, preferably comprising such a harvesting device and growth space. The present invention also relates to methods for harvesting crops.

There have been developments in the past decades relating to the harvesting of mushrooms and toadstools. The applicant of the present patent application is also applicant of the international patent application with publication number WO 2007/100245. Described in this international patent application is a device for facilitating harvesting of for instance mushrooms, which device makes it possible to harvest manually, while the manual operations remain limited solely to taking the mushrooms out of the substrate.

This invention came about from a cultivation practice wherein the growth location is a location other than the harvesting location. Transport of the seed-bed relative to the harvesting conveyor preferably takes place here.

In order to provide an alternative to this prior art solution the present invention provides a harvesting device for facilitating harvesting of crops with the features of claim 1.

An advantage of such a harvesting device is that the seed-bed can remain stationary at the location where it is utilized for cultivation. This reduces the danger of pathogens reaching the seed-bed. In for instance a growth environment wherein culture trays with substrate present therein are taken for each harvest to a harvesting device there is the risk of infection with a pathogen, and this is prevented by applying the present invention.

According to the invention the harvesting conveyer spans at least two seed-beds. This measure makes it possible to harvest two or more seed-beds during one harvesting run.

According to the invention the harvesting device comprises a bridging frame for spanning at least two seed-beds in the transverse direction thereof for the purpose of supporting the harvesting conveyer. Such a bridging frame makes it possible to strengthen the harvesting conveyer and/or provide additional equipment.

For the purpose of transporting and accompanying the harvesting device in the lengthwise direction of a seed-bed a further preferred embodiment provides a support assembly for supporting the harvesting conveyer and/or the bridging frame during transport while harvesting. Such a support assembly preferably comprises for instance a guide rail on each side of the harvesting device or the bridging frame. Alternatively, additional intermediate rails are preferably provided in the case of a plurality of elongate seed-beds.

Preferably removing means such as severing means for removing parts of the crop are provided. These removing means are preferably arranged on the underside of the crop holders at one or more positions of the conveyor. This can be understood from the stated patent specification.

The harvesting device more preferably comprises characteristic determining means for determining one or more characteristics, such as size, weight or colour, of individual crops. It is particularly recommended that parameters of the product are determined in optical manner, preferably by means of recording images, on the basis of which the characteristics can be calculated by means of a suitable algorithm. In the case of toadstools the weight can also be determined on the basis of for instance the size, or a sorting can be carried out on the basis of size classes. The harvesting device more preferably comprises transfer means, such as a transfer conveyer or a pick-and-place robot, for transferring the crop from the harvesting conveyer to a destination, such as a container, packaging or a further conveyer. The stated pick-and-place robot is a per se known device wherein a pickup element can pick up and place each plant separately at a desired position.

It hereby becomes possible in efficient manner to package or classify the products from the harvesting conveyer and transfer them to a position associated with this class. The device is preferably provided for this purpose with a transfer unit which is able to classify and control the device or parts thereof in correct manner for the purpose of transferring individual plants to a destination on the basis of a characteristic determined by means of the characteristic determining means.

According to a further preferred embodiment the device comprises a packaging conveyer arranged relative to the harvesting conveyer for feeding and/or discharging containers, such as packaging means, for the crops relative to the harvesting conveyer, and preferably suitable for containers for use with crops having different categories of characteristics. It hereby becomes possible to discharge the harvested crops in packed manner while a buffer is provided for such packages or other containers. During harvesting the packaging conveyer co-displaces here with the harvesting conveyer and/or the bridging frame in the longitudinal direction of the seed-beds.

A further aspect according to a preferred embodiment of the present invention relates to a growth space for growing crops according to claim 8.

Such a growth space per se provides advantages because it becomes possible to keep the used substrate separate from the fresh substrate. In other words, it becomes possible to realize one-way traffic of the substrate from the feed side to the discharge side. This prevents the risk of infection with pathogens or similar harmful elements.

A further preferred embodiment comprises for this purpose transport means on the discharge side for the purpose of discharging the used substrate by means of these transport means, wherein the transport means are preferably suitable for withdrawing from a seed-bed an insert member, such as a wire mesh, textile and/or geotextile, which can be arranged under the substrate. An example of the operation is as follows. Placed in a seed-bed with a smooth bottom is a geotextile which can be coupled to a pulling device such as a winch on the discharge side.

Subsequently placed on the geotextile is a substrate which is then used for a period of several weeks to several months as culture medium for toadstools. After use of the substrate the geotextile is pulled by means of the winch to the discharge side of the growth space, whereby the used substrate is discharged from the seed-bed. The empty seed-bed can be cleaned and provided with a new geotextile with substrate. The geotextile is more preferably unrolled from a roll on the feed side while substrate material is arranged simultaneously thereon. The substrate material is hereby arranged together with the geotextile over the length of the seed-bed.

For the purpose of the manual aspect of harvesting, i.e. picking the crops by hand from a substrate and placing thereof in the harvesting conveyer, the growth space preferably comprises two or more seed-beds at the same height, such as at a height of between 0.5 and 1.5 m, more preferably between 0.8 and 1.3 m, more preferably between 1.1 and 1.2 m. It is possible here for staff to walk along with the conveyer or take up position on a platform co-displacing with the conveyer.

A further preferred aspect of the present invention relates to a growth system for growing crops comprising said growth space and a harvesting device according to the present invention, wherein the growth system comprises:
- substrate feed means for feed to a substrate feed side of the growth space,
   - substrate discharge means for discharge of used substrate on the discharge side of the growth space, wherein:
- the system is adapted to transport the substrate in a direction of transport from the feed means to the discharge means.

This aspect of the present invention provides similar advantages as aspects discussed in the foregoing, wherein additional advantages are provided by means of for instance the feed means and discharge means. The feed means can for instance be embodied as a hopper which can be placed at the position of each seed-bed or a hopper arranged per seed-bed. A more manual method of filling is likewise possible. An important advantage of such embodiments according to the present invention are that a system and a method contribute in efficient manner toward the stated advantage of minimizing the dangers of infection in that there is one-way traffic in the growth space and the growth system.

A further aspect according to the present invention relates to a method for harvesting toadstools or mushrooms, comprising steps for:
- moving a harvesting device according to the present invention relative to at least one seed-bed. Such a method provides advantages as stated in the foregoing with reference to above stated preferred embodiments.

A further aspect according to the present invention relates to a method for harvesting toadstools or mushrooms with a harvesting device according to one or more of claims 1-7, comprising steps for:
- performing one or several initial harvesting runs from the seed-bed by means of picking by hand,
- performing further harvesting runs from the seed-bed by means of picking with an automatic severing device and/or a robot. Realized by means of such a method is that a high-quality crop is obtained following harvesting during the harvesting runs wherein the growth density is very high. Particularly during the first harvesting runs mushrooms for instance grow very closely together, whereby they damage each other during automated harvesting. A surprising insight according to the present invention lies in the fact that harvesting can be carried out from one or more seed-beds arranged parallel and at a height or level by means of automatic harvesting devices as well as by means of a system as stated above according to the present invention.

By means of a system according to the present invention as stated in the foregoing the amount of picked crop per work hour can be increased by a factor of 2 to 4 compared to for instance standard manual harvesting. However, when the quality of the crops growing on a substrate deteriorates as the substrate becomes older, or the quantity of growing crops is reduced, it is possible within the scope of the present invention to apply an automated harvesting device, wherein either the crops are intended for a lower qualitative level or a reduction in quality compared to manual harvesting is acceptable. The method according to the present aspect of the invention therefore provides a possible optimization heretofore unknown.

In a further preferred embodiment the method comprises steps for applying a harvesting device according to the present invention for the purpose of achieving advantages as referred to in the foregoing in combination with this aspect.

The method more preferably comprises steps for applying a seed-bed with suitable support means for a severing device and/or a robot. It becomes possible by means of such a seed-bed with suitable support means to apply a harvesting device already invented by the present inventor in a system according to the present invention.

Further advantages, features and details of the present invention will be described in greater detail hereinbelow on the basis of one or more preferred embodiments with reference to the accompanying figures. Similar though not necessarily identical components of different preferred embodiments are designated with the same reference numerals.
Fig. 1 shows an overview of a system according to a first preferred embodiment of the present invention applied over five parallel seed-beds.

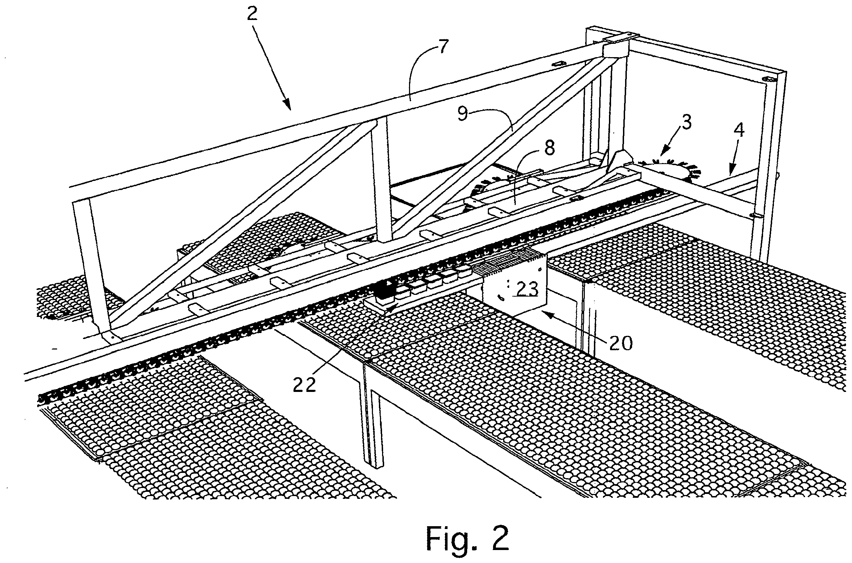

Fig. 2 shows a detail of a system according to Fig. 1.

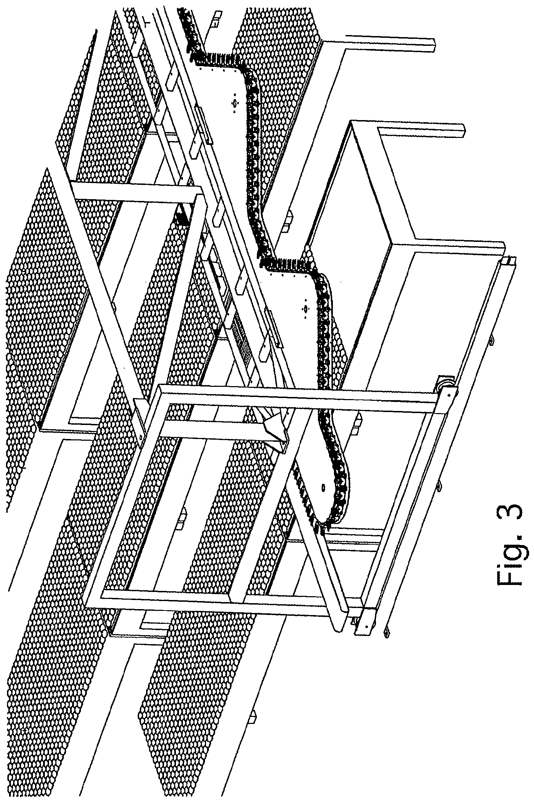

Fig. 3 shows a further detail of a system according to Fig. 1.

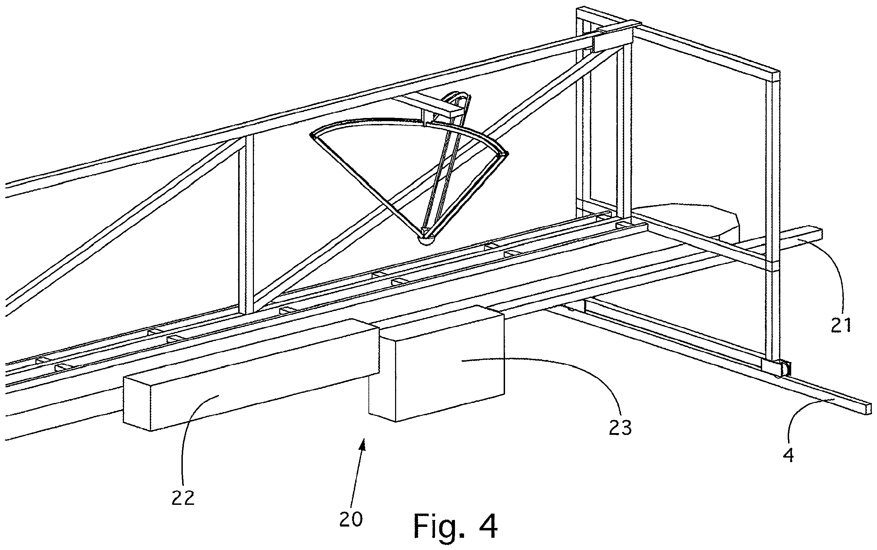

Fig. 4 shows a further view of a system such as that according to Fig. 1.

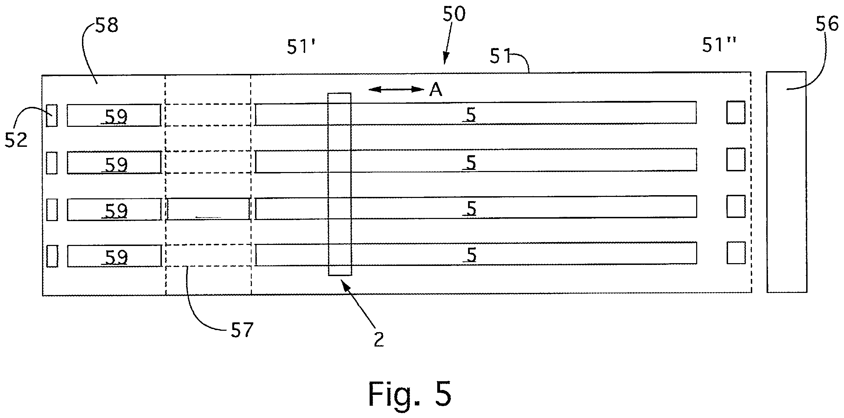

Fig. 5 shows a schematic representation of a growth system according to a further preferred embodiment of the present invention.

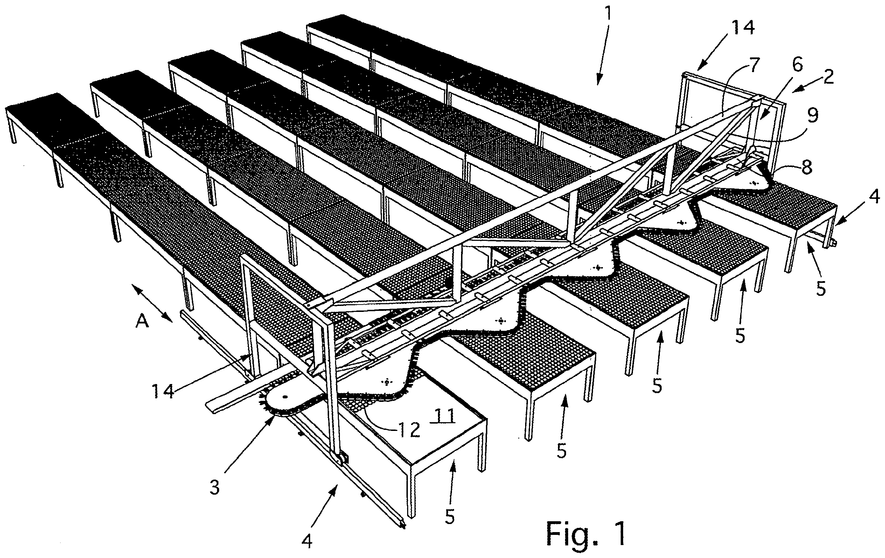

A first preferred embodiment (Fig. 1) according to the present invention relates to a mushroom cultivation and harvesting system 1. This system 1 comprises a number of main elements. A number of seed-beds 5 are arranged parallel alongside each other. The seed-beds are each provided with a substrate 11 for growing mushrooms 12 thereon. Arranged on either side of the outermost seed-beds are support rails for supporting a harvesting bridge 2 which functions as a support bridge for a harvesting conveyer 3. The harvesting conveyer is movable in the lengthwise direction of seed-beds in the direction of arrows A. Harvesting bridge 2 can travel here over rails 4. Because harvesting conveyer 3 spans all seed-beds, all the parallel seed-beds can be harvested in one transport run.

Harvesting bridge 2 comprises an upper beam 7, a lower beam 8 and a frame construction 9. A double beam is more preferably applied on the underside.

A wide span can hereby be realized with a good support of a harvesting conveyer 3. The harvesting bridge has on either side a carriage 14 for moving the harvesting bridge over the rails 4. Depending on the length of the bridge, or the number of seed-beds which have to be spanned, additional intermediate carriages 14 and rails 4 can be applied.

The harvesting conveyer is a further development, specifically developed for this purpose, of the harvesting conveyer of the PCT application referred to in the introduction. Known from this application is a conveyer which can assist in harvesting in that use is made of a conveyer which allows passage of crop receiving members above the location at the bed where the mushrooms are growing. A person harvesting mushrooms can hereby take, or pick, them from the bed and place them by means of a short manual movement in the crop receiving member of the harvesting conveyer, whereby following this short non-damaging manual operation they can be automatically discharged and further processed.

The specifically developed harvesting conveyer according to the present invention is provided for each seed-bed with a harvesting element which is substantially V-shaped as seen in top view and which can be approached from two sides of the seed-bed for the shortest possible and efficient short manual movement between picking and placing of the mushroom in the crop receiving member.

A further purpose of the harvesting bridge 2 is being able to mount thereon a sub-system 20 comprising package denester 22 and conveyer 21 for packages. In such a sub-system 20 packages, such as packages for use by final consumers, can be applied in combination with the harvesting bridge and the harvesting conveyer. It hereby becomes possible by means of a pick-and-place robot 24 to transfer mushrooms from the crop receiving members of harvesting conveyer 3 to the packages. This can be performed on the basis of measurements carried out by means of for instance a camera of the robot 24. This robot is a robot capable of displacing products from any location in a three-dimensional space to another location in the same three-dimensional space. Such systems are freely available and can be applied within the context of the present invention for the purpose of taking up a predetermined crop from a predetermined crop receiving member and displacing this crop to a predetermined package. It is possible here to determine the size and further stated parameters by means of for instance visual means. On the basis of this determination the mushrooms can then be displaced to the desired package.

Alternatively, a package can be filled until a weighing unit 23 under the package has determined that the filling of a package has reached a determined level, and the package is then displaced by means of discharge conveyer 21. The package which is displaced is either temporarily stored on a unit (not shown) co-displacing with the harvesting bridge or discharged immediately from the harvesting bridge.

A growth system 50 according to the present invention comprises a harvesting space 51 with a feed side 51' and a discharge side 51". Situated on the feed side of harvesting space 51 is a nursery space 58 for initial raising of a crop placed in fresh substrate, such as a new mycelium, to a stage at which harvesting becomes worthwhile. A number of seed-beds, in the example four, are arranged one above another in the nursery space so that they can develop while taking up minimum space and under the best possible conditions. At the end of the nursery period the developed substrate is transferred to the harvesting bed 5 in harvesting space 51.

Use is made for this purpose of a transfer system 57 which is preferably embodied as a guide element which can be adjusted at the side of the nursery space 58 to the height of a substrate to be transferred and which is adapted on the side of harvesting space 51 to the height of harvesting bed 5. The substrate can hereby be pulled across to harvesting bed 5 by means of geotextile situated thereunder. Alternatively, transfer system 57 can be embodied as a platform which is variable in height by means of a lifting assembly and which can be adjusted on one side to the height of all seed-beds and on the other side to the height of the harvesting bed or the harvesting beds.

An initial nursery period, for instance for mushrooms, is for instance about 3 to 4 weeks. A harvesting period for a substrate is for instance also about 3 to 4 weeks. It hereby becomes possible to initially raise a new substrate to harvesting level simultaneously with the harvesting period. Because of the relatively small use of space in terms of floor area in the initial nursery space 58, a saving is achieved compared to the use of space by a double harvesting space 51. Of further importance is that during the initial nursery period a physical separation is possible between the spaces 51 and 58, thereby substantially preventing transfer of pathogens. Of further importance here is that many known consequences of pathogens need a minimum time period of four weeks to develop. Because cross-infections can be prevented during the initial raising and the harvesting by applying the present invention, it is possible to effectively achieve that no losses are incurred during harvesting, **since the harvesting period, which is higher-risk in respect of infection, does not last longer than the period in which the infection will result in damage.** It is also important here that the yield decreases as the harvesting period progresses, whereby the highest yield is obtained during the initial period.

Situated on the feed side outside the nursery space for each seed-bed or stack of seed-beds 59 is a feed roller 52 for feeding a geotextile for the purpose of co-displacing a substrate. A seed-bed 59 is filled by means of a per se known filling machine for introducing substrate into the seed-bed. Situated on the discharge side of seed-bed 5 is a discharge roller 54 for geotextile with a transport track 57 indicated by means of broken lines. Once the substrate has been used in the seed-bed, the substrate can be discharged by a rotating the discharge roller 54, wherein the substrate is dumped at a location 56. The location 56 can for instance comprise a pit or a dock for a truck for the purpose of direct disposal of the used substrate. As indicated in the foregoing, this achieves that the substrate is carried only in the direction of arrow B through the growth space. A hygienic arrangement is hereby created which prevents substrate contaminated with pathogens being transported in opposite direction to arrow B and coming to lie at clean locations of the operation.

The present invention has been described in the foregoing on the basis of several preferred embodiments. Different aspects of different embodiments are deemed described in combination with each other, wherein the scope of protection is defined in the appended claims.

## Claims

1. Harvesting device for facilitating harvesting of mushrooms or toadstools growing on a substrate (11) or soil, the device comprising:
- a harvesting conveyer (3) comprising crop receiving members suitable for simple manual placing of the crops therein, wherein the conveyor is adapted to transport away the crops from a location within manual reach of the growing location of the crop by picking and placing of the mushroom in a respective crop receiving member,
- transport means (14) for transporting the harvesting conveyer relative to the substrate or the soil, wherein
- the harvesting device is suitable for simultaneously harvesting over substantially the whole length of at least two seed-beds (5), and **characterized by** further
- comprising a bridging frame (2) for spanning at least two seed-beds in the transverse direction thereof for the purpose of supporting the harvesting conveyer.

2. Harvesting device as claimed in the previous claim, comprising a support assembly (7, 8, 9) for supporting the harvesting conveyer and/or the bridging frame during transport while harvesting.

3. Harvesting device as claimed in one or more of the foregoing claims, comprising removing means, such as severing means, for removing parts of the crop.

4. Harvesting device as claimed in one or more of the foregoing claims, comprising characteristic determining means for determining one or more characteristics, such as size, weight or colour, of individual crops.

5. Harvesting device as claimed in one or more of the foregoing claims, comprising transfer means, such as a transfer conveyer or a pick-and-place robot (24), for transferring the crop from the harvesting conveyer to a destination, such as a container, packaging or a further conveyer.

6. Harvesting device as claimed in one or more of the foregoing claims 4 or 5, comprising means for transferring (24) individual toadstools or mushrooms to a destination on the basis of a characteristic determined by means of the characteristic determining means.

7. Harvesting device as claimed in one or more of the foregoing claims, comprising a packaging conveyer arranged relative to the harvesting conveyer for feeding and/or discharging containers, such as packaging means, for the toadstools or mushrooms relative to the harvesting conveyer, preferably suitable for containers for use with toadstools or mushrooms having different categories of characteristics.

8. Growth space (50) for growing crops comprising a device according to one or more of the preceding claims, further comprising:
- a substrate feed side for feed of fresh substrate to the growth space for placing thereof in respective seed-beds (5),
- a substrate discharge side for discharge of used substrate from the growth space after use of the substrate in the seed-bed for the purpose of transfer thereof from the respective seed-beds (5),
- a nursery space (58) for initial raising of a crop placed in fresh substrate,
- a harvesting space (51) with a feed side (51') and a discharge side (51"), comprising two or more seed-beds (5) at the same height.

9. Growth space as claimed in claim 8, comprising transport means on the discharge side for the purpose of discharging the used substrate by means of these transport means, wherein the transport means are preferably suitable for withdrawing from a seed-bed an insert member, such as a wire mesh, textile and/or geotextile, which can be arranged under the substrate.

10. Growth space as claimed in claim 8 or 9, further **characterised in that** the seed-beds are at a height of between 0.5 and 1.5 m, more preferably between 0.8 and 1.3 m, more preferably between 1.1 and 1.2 m.

11. Growth system for growing crops comprising a growth space according to claim 8, 9 or 10 and a harvesting device according to one or more of the claims 1-7, wherein the growth system comprises:
- substrate feed means for feed to a substrate feed side of the growth space,
- substrate discharge means for discharge of used substrate on the discharge side of the growth space, wherein:
- the system is adapted to transport the substrate in a direction of transport from the feed means to the discharge means.

12. Method for harvesting toadstools or mushrooms, comprising the step of:
- moving a harvesting device as claimed in one or more of the claims 1-7 relative to at least one seed-bed.

13. Method for harvesting toadstools or mushrooms with a harvesting device according one or more of the claims 1-7 and/or in a growth space according to claim 8-10 comprising steps for:
- performing one or several initial harvesting runs from the seed-bed by means of picking by hand,
- performing further harvesting runs from the seed-bed by means of picking with an automatic severing device and/or a robot.

14. Method as claimed in claim 12 or 13, comprising the step of using a harvesting device according to one or more of the claims 1-7.

15. Method as claimed in one or more of the claims 12-14, comprising steps for applying a seed-bed with suitable support means for a severing device and/or a robot.

## Patentansprüche

1. Erntevorrichtung zur Erleichterung des Erntens von Champignons oder Pilzen, die auf einem Substrat (11) oder Boden wachsen, wobei die Vorrichtung umfasst:
- einen Ernteförderer (3), der Erntegutaufnahmeglieder umfasst, die zum einfachen manuellen Ablegen der Ernte geeignet sind, wobei der Förderer dazu ausgelegt ist, die Ernte abzuführen von einem Ort in manueller Reichweite des Anwachsortes der Ernte durch pflücken und ablegen des Champignons in einem jeweiligen Erntegutaufnahmeglied,
- Transportmittel (14) zum Transportieren des Ernteförderers relativ zum Substrat oder zum Boden, wobei
- die Erntevorrichtung zum gleichzeitigen Ernten über im wesentlichen die gesamte Länge von mindestens zwei Saatbeeten (5) geeignet ist und sich durch weitere auszeichnet
- mit einem Überbrückungsrahmen (2) zum Überspannen von mindestens zwei Saatbeeten in deren Querrichtung zum Abstützen des Ernteförderers.

2. Erntevorrichtung nach dem vorhergehenden Anspruch, umfassend eine Stützanordnung (7, 8, 9) zum Stützen des Ernteförderers und/oder des Überbrückungsrahmens während des Transports während der Ernte.

3. Erntevorrichtung nach einem oder mehreren der vorhergehenden Ansprüche, umfassend Entfernungsmittel, wie Trennmittel, zum Entfernen von Teilen des Ernteguts.

4. Erntevorrichtung nach einem oder mehreren der vorhergehenden Ansprüche, mit Merkmalbestimmungsmitteln zum Bestimmen eines oder mehrerer Merkmale wie Größe, Gewicht oder Farbe einzelner Kulturpflanzen.

5. Erntevorrichtung nach einem oder mehreren der vorhergehenden Ansprüche, mit Übergabemitteln, wie einem Übergabeförderer oder einem Bestückungsroboter (24), zum Übergeben des Ernteguts vom Ernteförderer an einen Bestimmungsort, wie einen Behälter, eine Verpackung oder einen weiteren Förderer.

6. Erntevorrichtung nach einem oder mehreren der vorhergehenden Ansprüche 4 oder 5, mit Mitteln zum Überführen (24) einzelner Champignons oder Pilzen zu einem Bestimmungsort auf der Grundlage eines Merkmals, das mit Hilfe des Merkmalsbestimmungsmittels bestimmt wurde.

7. Erntevorrichtung nach einem oder mehreren der vorhergehenden Ansprüche, mit einem gegenüber dem Ernteförderer angeordneten Verpackungsförderer zum Zuführen und/oder Abgeben von Behältern, wie Verpackungsmittel, für die Champignons oder Pilzen gegenüber dem Ernteförderer, vorzugsweise Geeignet für Behälter zur Verwendung mit Champignons oder Pilzen mit verschiedenen Kategorien von Merkmalen.

8. Wachstumsraum (50) zum Anbau von Kulturpflanzen, umfassend eine Vorrichtung nach einem oder mehreren der vorhergehenden Ansprüche, ferner umfassend:
- eine Substratzufuhrseite zum Zuführen von frischem Substrat zum Wachstumsraum, um dieses in entsprechende Saatbeete (5) zu legen,
- eine Substratabgabeseite zum Abgeben von verbrauchtem Substrat aus dem Wachstumsraum nach Verwendung des Substrats im Saatbett zum Zwecke seiner Übergabe aus den jeweiligen Saatbetten (5),
- einen Jungpflanzenanzuchtraum (58) zum anfänglichen Aufziehen eines Ernteguts, das in frischem Substrat platziert ist;
- einen Ernteraum (51) mit einer Zufuhrseite (51') und einer Abfuhrseite (51"), der zwei oder mehr Saatbeete (5) auf gleicher Höhe umfasst.

9. Wachstumsraum nach Anspruch 8, enthaltend abfuhrseitige Transportmittel zum Abfuhren des verbrauchten Substrats mittels dieser Transportmittel, wobei die Transportmittel vorzugsweise geeignet sind zum Entnehmen aus einem Saatbett eines Einsatzelementes, wie ein Drahtgeflecht, Textil und/oder Geotextil, das unter dem Substrat angeordnet werden kann.

10. Wachstumsraum nach Anspruch 8 oder 9, weiter **dadurch gekennzeichnet, dass** es sich befindet in einer Höhe zwischen 0,5 und 1,5 m, besonders bevorzugt zwischen 0,8 und 1,3 m, ganz besonders bevorzugt zwischen 1,1 und 1,2 m.

11. Wachstumssystem zum Anbau von Kulturpflanzen, umfassend einen Wachstumsraum nach Anspruch 8, 9 oder 10 und eine Erntevorrichtung nach einem oder mehreren der Ansprüche 1-7, wobei das Wachstumssystem umfasst:
- Substratzuführmittel zum Zuführen zu einer Substratzuführseite des Wachstumsraums,
- Substratabfuhrmittel zum Abfuhren von gebrauchtem Substrat auf der Abfuhrseite des Wachstumsraums, wobei:
- das System dazu eingerichtet ist dass das Substrat in einer Transportrichtung von der Zuführeinrichtung zu der Abführeinrichtung zu transportieren.

12. Verfahren zum Ernten von Giftpilzen oder Pilzen, umfassend die folgenden Schritte:
- bewegen einer Erntevorrichtung nach einem oder mehreren der Ansprüche 1 bis 7 relativ zu mindestens einem Saatbett.

13. Verfahren zum Ernten von Giftpilzen oder Pilzen mit einer Erntevorrichtung nach einem oder mehreren der Ansprüche 1-7 und / oder in einem Wachstumsraum nach Anspruch 8-10, umfassend Schritte zum:
- Durchführen eines oder mehrerer Erntevorgänge vom Saatbett aus durch Pflücken von Hand;
- Durchführen weiterer Ernteläufe vom Saatbett aus mittels Pflücken mit einer automatischen Trennvorrichtung und / oder einem Roboter.

14. Verfahren nach Anspruch 12 oder 13, umfassend den Schritt des Verwendens einer Erntevorrichtung nach einem oder mehreren der Ansprüche 1 bis 7.

15. Verfahren nach einem oder mehreren der Ansprüche 12 bis 14, umfassend Schritte zum Aufbringen eines Saatbettes mit geeigneten Stützmitteln für eine Trennvorrichtung und/oder einen Roboter.

## Revendications

1. Dispositif de récolte destiné à faciliter la récolte de champignons ou de fongus poussant sur un substrat (11) ou un sol, le dispositif comprenant:
- un convoyeur de récolte (3) comprenant des éléments de réception de récolte appropriés pour un placement manuel simple des récoltes dans celui-ci, le convoyeur étant adapté pour transporter les récoltes d'un emplacement à portée manuelle de l'emplacement de culture de la récolte par cueillette et placement du champignon dans un élément recevant la culture respective,
- un moyen de transport (14) pour transporter le convoyeur de récolte par rapport au substrat ou au sol, dans lequel
- le dispositif de récolte est approprié pour récolter simultanément sur sensiblement toute la longueur d'au moins deux lits de germination (5), et **caractérisé en ce que**
- comprenant un cadre de pontage (2) pour couvrir au moins deux lits de germination dans la direction transversale de celui-ci afin de supporter le transporteur de récolte.

2. Dispositif de récolte selon la revendication précédente, comprenant un ensemble de support (7, 8, 9) pour supporter le transporteur de récolte et/ou le bâti de pontage pendant le transport pendant la récolte.

3. Dispositif de récolte selon une ou plusieurs des revendications précédentes, comprenant un moyen d'enlèvement, tel qu'un moyen de séparation, pour enlever des parties de la récolte.

4. Dispositif de récolte selon l'une ou plusieurs des revendications précédentes, comprenant un moyen de détermination de caractéristique pour déterminer une ou plusieurs caractéristiques, telles que la taille, le poids ou la couleur, de cultures individuelles.

5. Dispositif de récolte selon une ou plusieurs des revendications précédentes, comprenant des moyens de transfert, tels qu'un transporteur de transfert ou un robot de transfert (24), pour transférer la récolte du transporteur de récolte à une destination, telle que un conteneur, un emballage ou un autre transporteur.

6. Dispositif de récolte selon une ou plusieurs des revendications précédentes 4 ou 5, comprenant un moyen pour transférer (24) des champignons ou de fongus individuels à une destination sur la base d'une caractéristique déterminée au moyen du moyen de détermination de caractéristique.

7. Dispositif de récolte selon une ou plusieurs des revendications précédentes, comprenant un transporteur d'emballage disposé par rapport au transporteur de récolte pour alimenter et/ou décharger des conteneurs, tels que des moyens d'emballage, pour les champignons ou de fongus par rapport au transporteur de récolte, de préférence convient aux conteneurs destinés à être utilisés avec des champignons ou de fongus ayant différentes catégories de caractéristiques.

8. Espace de croissance (50) pour cultiver des cultures comprenant un dispositif selon une ou plusieurs des revendications précédentes, comprenant en outre:
- un côté alimentation de substrat pour l'alimentation de substrat frais dans l'espace de croissance afin de le placer dans les lits de germination respectifs (5),
- un côté décharge du substrat pour décharger le substrat utilisé de l'espace de croissance après l'utilisation du substrat dans le lit de germination en vue de son transfert depuis les lits de germination respectifs (5),
- un espace de pépinière (58) pour l'élevage initial d'une culture placée dans un substrat frais,
- un espace de récolte (51) avec un côté alimentation (51') et un côté décharge (51"), comprenant deux ou plusieurs lits de germination (5) à la même hauteur.

9. Espace de croissance selon la revendication 8, comprenant des moyens de transport du côté décharge pour décharger le substrat utilisé au moyen de ces moyens de transport, les moyens de transport étant de préférence adaptés au retrait d'un semis d'un insert membre, tel qu'un treillis métallique, textile et/ou géotextile, qui peut être disposé sous le substrat.

10. Espace de croissance selon la revendication 8 ou 9, **caractérisé en outre en ce que** sa hauteur est comprise entre 0,5 et 1,5 m, plus préférablement entre 0,8 et 1,3 m et plus préférentiellement entre 1,1 et 1,2 m.

11. Système de croissance pour cultiver des cultures comprenant un espace de croissance selon la revendication 8, 9 ou 10 et un dispositif de récolte selon l'une ou plusieurs des revendications 1-7, dans lequel le système de croissance comprend:
- des moyens d'alimentation de substrat pour l'alimentation d'un côté alimentation de substrat de l'espace de croissance,
- des moyens de décharge de substrat pour décharger le substrat utilisé du côté décharge de l'espace de croissance, dans lesquels:
- le système est adapté pour transporter le substrat dans une direction de transport du moyen d'alimentation au moyen de décharge.

12. Procédé de récolte de champignons ou de fongus, comprenant les étapes consistant à:
- déplacer un dispositif de récolte selon l'une ou plusieurs des revendications 1-7 par rapport à au moins un lit de germination.

13. Procédé de récolte de champignons ou de fongus avec un dispositif de récolte selon l'une ou plusieurs des revendications 1-7 et/ou dans un espace de croissance selon les revendications 8-10, comprenant les étapes consistant à:
- effectuer une ou plusieurs récoltes initiales à partir du lits de germination au moyen d'une cueillette à la main,
- effectuer des récoltes supplémentaires à partir du lits de germination au moyen d'une cueillette à l'aide d'un dispositif de séparation automatique et/ou d'un robot.

14. Procédé selon la revendication 12 ou 13, comprenant l'étape consistant à utiliser un dispositif de récolte selon une ou plusieurs des revendications 1-7.

15. Procédé selon l'une ou plusieurs des revendications 12-14, comprenant des étapes pour appliquer un lit de germination avec des moyens de support appropriés pour un dispositif de séparation et/ou un robot.
